# NEUE EUROPÄISCHE PATENTSCHRIFT

(11) **EP 3 494 789 B2**
(45) Veröffentlichungstag und Bekanntmachung des Hinweises auf die Entscheidung über den Einspruch: **22.11.2023**
(45) Hinweis auf die Patenterteilung: 11.11.2020
(21) Anmeldenummer: 18210322.6
(22) Anmeldetag: 05.12.2018
(51) Int. Cl.: A01M 7/00, B05B 15/658, B05B 1/30

(54) **VORRICHTUNG ZUM AUSBRINGEN VON FLÜSSIGKEITEN, DÜNGEMITTELN, SCHÄDLINGSBEKÄMPFUNGSMITTELN UND DERGLEICHEN**
DEVICE FOR APPLYING LIQUID, FERTILISER, PESTICIDE AND THE LIKE
DISPOSITIF D'APPLICATION DE LIQUIDES, D'ENGRAIS, DE PESTICIDES ET ANALOGUES

(30) Priorität: 06.12.2017 DE 102017129007
(43) Veröffentlichungstag der Anmeldung: 12.06.2019
(73) Patentinhaber: agrotop GmbH, 93083 Obertraubling (DE)
(72) Erfinder: Graef, Steffen, 93083 Obertraubling (DE); Schenk, Thomas, 72639 Neuffen (DE); Renner, Franz, 93083 Obertraubling (DE)
(74) Vertreter: Bittner, Bernhard

(56) Entgegenhaltungen:
- EP-A1- 2 957 346
- EP-A1- 3 090 630
- WO-A1-2014/159119
- DE-A1- 19 615 205
- DE-A1-102007 017 315
- GB-A- 2 229 074
- US-A- 3 515 349
- US-A1- 2016 120 117
- US-A1- 2017 049 043
- Jacob Rüegg, René Total: "Dropleg-Applikationstechnik für zielgerichteten Pflanzenschutz in Reihenkulturen - Einführung und Hinweise für Produzenten und Berater", Flugschrift, 1 October 2013 (2013-10-01), page 27pp,
- Internetseite https://ira.agroscope.ch/de-CH/Publication /32826
- Internetseite Agroscope - Impressum
- Auszug der Internetseite klmag.ch vom 11. Oktober 2016 vonwww.archive.org
- Dropleg-Technik, Schweizer Bauer Dossier, 15. Marz 2014

## Beschreibung

Die vorliegende Erfindung bezieht sich auf eine Vorrichtung zum Ausbringen von Flüssigkeiten und insbesondere von Düngemitteln, Schädlingsbekämpfungsmitteln, Herbiziden, Fungiziden und dergleichen. Damit bezieht sich die vorliegende Erfindung insbesondere auf den Bereich der Landwirtschaft. Im Stand der Technik ist es seit langem bekannt, dass Flüssigkeiten wie beispielsweise Düngemittel, Schädlingsbekämpfungsmittel, Herbizide und Fungizide maschinell ausgebracht werden. Dabei ist es bekannt, dass entsprechende Austragungsmaschinen Ausleger aufweisen, an denen hängend und oder schleppend Rohre angeordnet sind, wobei diese Rohre eine endseitige Austrittsöffnung aufweisen, über welche die jeweilige Flüssigkeit auf einen Zielbereich, wie etwa ein Feld ausgebracht werden kann. Diese Rohre werden z.T. auch als Schlepprohre bezeichnet wie sie zum Beispiel durch die US 2017/049043 A1 bekannt sind.

Dabei müssen diese Austragungseinheiten relativ robust sein, da eine Ausbringung bzw. Austragung in der Regel in relativ unwegsamen Gelände erfolgt. So kann es zu Schädigungen dieser Austragungsmittel kommen, beispielsweise durch Unebenheiten im Boden und dergleichen.

Ein weiteres Problem entsteht dadurch, dass abhängig von dem jeweiligen zu behandelnden Gut, beispielsweise einer Pflanzenart, die Flüssigkeit in unterschiedlichen Bereichen auszubringen ist. So ist es beispielsweise möglich, dass ein Schädlingsbekämpfungsmittel an einem Stängel oder auch an Blättern des jeweiligen Gewächses ausgebracht werden soll. Aus dem Stand der Technik bekannte Ausbringungsmittel erlauben eine derartige Variierbarkeit der Ausbringungsposition nicht.

Die EP 3 090 630 A1 offenbart eine landwirtschaftliche Feldspritze mit einer Vorrichtung gemäß dem Oberbegriff des Anspruchs 1.

J Der vorliegenden Erfindung liegt daher die Aufgabe zugrunde, eine Vorrichtung zum Ausbringen von derartigen Flüssigkeiten zur Verfügung zu stellen, welche auch auf unterschiedliche Pflanzengattungen anpassbar ist. Diese Aufgabe wird erfindungsgemäß durch den Gegenstand von Anspruch 1 erreicht. Vorteilhafte Ausführungsformen und Weiterbildungen sind Gegenstand der Unteransprüche.

Eine erfindungsgemäße Vorrichtung zum Ausbringen von Flüssigkeiten und insbesondere von Düngemitteln, Schädlingsbekämpfungsmitteln und dergleichen weist einen Anschluss auf, um diese Vorrichtung an einer Maschine zu befestigen. Daneben weist die Vorrichtung einen rohrförmigen Körper zum Leiten der Flüssigkeit auf, sowie eine Auslasseinrichtung über welche die Flüssigkeit auslassbar ist.

Erfindungsgemäß ist die Auslasseinrichtung in einer Längsrichtung des rohrförmigen Körpers an unterschiedlichen Positionen fixierbar, derart, dass eine Position der Auslasseinrichtung bezogen auf den rohrförmigen Körper wählbar ist. Da diese Vorrichtung in einer im Wesentlichen vertikalen Ausrichtung eingesetzt wird, lässt sich erfindungsgemäß Z durch diese Positionsbestimmung auch die Höhe bestimmen, auf der die Auslasseinrichtung angeordnet wird. Im Stand der Technik bekannte Vorrichtungen weisen hierzu im Gegensatz üblicherweise eine endseitige Öffnung auf, sodass die Ausbringungshöhe bereits durch die Länge der Vorrichtung festgelegt ist. Im Bezug auf die oben erwähnten Schlepprohre wird daher vorgeschlagen, dass die Auslasseinrichtung im Wesentlichen nicht notwendig endseitig angebracht ist, sondern insbesondere an einem Außenumfang des rohrförmigen Körpers anliegt.

Bei der Maschine kann es sich insbesondere um eine landwirtschaftliche Maschine handeln. Bevorzugt ist der Anschluss derart ausgebildet, dass er von der Maschine gelöst werden kann, beispielsweise um die besagte Vorrichtung durch eine andere Vorrichtung auszutauschen.

In einer bevorzugten Ausführungsform kann diese Maschine einen Träger aufweisen, an dem eine Vielzahl der hier beschriebenen Vorrichtungen angeordnet werden kann. Dieser Träger kann sich dabei bevorzugt quer zu einer Fahrtrichtung der Maschine erstrecken.

Bei einer weiteren vorteilhaften Ausführungsform ist es daher möglich, dass die Enden der Vorrichtung relativ nahe an einem zu bearbeitenden oder zu behandelnden Boden oder ein zu beaufschlagendes Gewächs herangeführt werden.

Bei einer weiteren bevorzugten Ausführungsform ist zwischen dem Anschluss und dem rohrförmigen Körper ein weiterer insbesondere flexibler Körper angeordnet, der ebenfalls zum Leiten der Flüssigkeit dient. Dieser flexible Körper kann dabei beispielsweise als Schlauch ausgestaltet sein, der bevorzugt sowohl an dem Anschluss als auch an dem rohrförmigen Körper angeordnet ist. Dabei ist es möglich, dass dieser flexible Körper insbesondere aber nicht ausschließlich mittels eines Verbindungsmechanismus wie etwa einer Rohrschelle an dem Anschluss befestigt ist. Daneben kann dieser flexible Körper auch mit einem weiteren Verbindungsmechanismus wie insbesondere einer Rohrschelle an dem rohrförmigen Körper angeordnet sein.

Bei einer weiteren bevorzugten Ausführungsform kann der flexible Körper als Schlauch ausgebildet sein, an dessen Außenumfang eine Federeinrichtung angeordnet ist. Diese Federeinrichtung kann dabei eine gewünschte Biegsamkeit des flexiblen Körpers bewirken. Bei einer weiteren bevorzugten Ausführungsform handelt es sich bei dem Anschluss um einen bajonettartigen Anschluss, der insbesondere manuell an dem Auslass angebracht werden kann. Auf diese Weise ist ein schneller Wechsel der einzelnen Ausbringvorrichtungen bzw. Austrageinrichtungen möglich.

Bei einer bevorzugten Ausführungsform ist in einer Umfangswandung des rohrförmigen Körpers wenigstens eine Öffnung angeordnet, durch welche hindurch die Flüssigkeit austreten kann. Insbesondere kann in diesem Fall die Flüssigkeit hin zu der Auslasseinrichtung austreten. So ist es möglich, dass durch den Benutzer in einer bestimmten Höhe eine Öffnung eingebracht, beispielsweise gebohrt, wird und die Auslasseinrichtung an diese Öffnung angelegt wird. Durch die Wahl der Höhenposition dieser Öffnung kann auch die Position der Auslasseinrichtung bestimmt werden und damit die Höhe bzw. der Höhenbereich, in der/dem die Flüssigkeit ausgebracht wird.

Bei einer weiteren vorteilhaften Ausführungsform ist die Auslasseinrichtung mittels eines Klemmmechanismus und/oder Klammermechanismus an dem rohrförmigen Körper befestigbar. So kann beispielsweise die Auslasseinrichtung direkt an die Öffnung in der Umfangswand des röhrförmigen Körpers angeklemmt werden. Auf diese Weise kann durch die Öffnung in dem Umfangskörper bzw. rohrförmigen Körper hindurch die Flüssigkeit in die Auslasseinrichtung eintreten. In einer bevorzugten Ausführungsform ist die Auslasseinrichtung abdichtend an dem rohrförmigen Körper befestigbar.

Bei einer weiteren vorteilhaften Ausführungsform weist die Auslasseinrichtung einen Träger auf, wobei dieser Träger wenigstens ein erstes Trägerteil und ein zweites Trägerteil aufweist, welche aneinander und mit dem rohrförmigen Körper befestigbar sind. Bevorzugt sind dabei dieses erste und zweite Trägerteil derart ausgebildet, dass sie den rohrförmigen Körper zwischen sich aufnehmen können. Vorteilhaft ist weiterhin eine Verbindungseinrichtung vorgesehen, um die beiden Trägerteile miteinander zu verbinden. So können beispielsweise ein oder zwei Schraubverbindungen vorgesehen sein, mittels denen die beiden Trägerteile um den rohrförmigen Körper herum befestigt werden können. Durch Festziehen dieser Schraubverbindung kann dabei die Auslasseinrichtung an dem rohrförmigen Körper befestigt werden.

Vorteilhaft weist der rohrförmige Körper einen kreisförmigen Querschnitt auf. Bei einer bevorzugten Ausführungsform kann dabei eines der beiden Trägerteile und bevorzugt beide Trägerteile eine ebenfalls kreis- oder zylinderförmige oder halbzylinder- oder halbkreisförmige Ausnehmung aufweisen, in welche Bestandteile des rohrförmigen Körpers eingelegt werden können.

Bei einer weiteren bevorzugten Ausführungsform ist der rohrförmige Körper aus einem Kunststoff hergestellt. Besonders bevorzugt ist der rohrförmige Körper flexibel ausgebildet.

Bei einer weiteren vorteilhaften Ausführungsform ist auch wenigstens eines der beiden Trägerteile und sind bevorzugt beide Trägerteile aus einem Kunststoff hergestellt.

Bei einer weiteren vorteilhaften Ausführungsform weist die Auslasseinrichtung wenigstens eine Düseneinrichtung auf, wobei bevorzugt diese Düseneinrichtung lösbar an einem Träger der Auslasseinrichtung angeordnet ist. So kann die Auslasseinrichtung eine Ausnehmung aufweisen, in welche eine Düseneinrichtung eingeschoben werden kann. Auch diese Düseneinrichtung kann dabei auf einem Träger angeordnet sein und dieser Träger kann wiederum in die Auslasseinrichtung eingeschoben werden. Bevorzugt wird dabei die Düseneinrichtung in eine Ausnehmung eingeschoben.

Bei einer weiteren vorteilhaften Ausführungsform sind Dichteinrichtungen vorgesehen, um die Düseneinrichtung gegenüber dem Auslassträger abzudichten. So kann beispielsweise die Düseneinrichtung ein Dichtmittel wie insbesondere aber nicht ausschließlich einen O-Ring aufweisen, mittels dessen die Düseneinrichtung gegenüber der Auslasseinrichtung abgedichtet werden kann.

Bei einer weiteren vorteilhaften Ausführungsform ist die Düseneinrichtung eine Düseneinrichtung, welche eine gleichmäßige Beaufschlagung ermöglicht. Insbesondere erlaubt die Düseneinrichtung eine Streuung bzw. ein Ausbringen der Flüssigkeit mit einer vorgegebenen Streurichtung in einer Längsrichtung des rohrförmigen Körpers. So kann beispielsweise ein Streuwinkel ermöglicht sein von wenigstens 10°, bevorzugt von wenigstens 20°, bevorzugt von wenigstens 30° und besonders bevorzugt von wenigstes 40°. Auf diese Weise ist auch eine starke Austragung in einer Längsrichtung des rohrförmigen Trägers und besonders bevorzugt damit auch in einer Höhenrichtung des zu behandelnden Pflanzenguts möglich.

Bei einer weiteren vorteilhaften Ausführungsform weist die Auslasseinrichtung wenigstens zwei Düseneinrichtungen auf, welche an dem Träger und oder der Auslasseinrichtung angeordnet sind. Dabei ist es möglich, dass diese zwei Düseneinrichtungen in unterschiedliche Richtungen ausstrahlen, beispielsweise in zwei unterschiedliche Richtungen in einer zu der vertikalen bzw. Höhenrichtung senkrechten Richtung. So können beispielsweise die beiden Düseneinrichtungen bezogen auf eine Fahrtrichtung einer Ausbringmaschine nach links und rechts streuen bzw. die Flüssigkeit ausbringen.

Bei einer weiteren vorteilhaften Ausführungsform strahlen damit die Düseneinrichtungen in unterschiedliche Richtungen.

Bei einer bevorzugten Ausführungsform ist in dem Träger ein Kanal vorgesehen, der zum Leiten des Mediums bzw. der Flüssigkeit dient. Bevorzugt erstreckt sich dieser Kanal in einem montierten Zustand in einer radialen Richtung bezüglich des rohrförmigen Körpers bzw. in einer Richtung, die zu dem rohrförmigen Körper bzw. dessen Längsrichtung senkrecht steht.

Bei einer weiteren vorteilhaften Ausführungsform stellt dieser Kanal eine Strömungsverbindung zu einer Öffnung her, welche sich in der Umfangswandung des rohrförmigen Körpers befindet.

Bei einer weiteren bevorzugten Ausführungsform zweigen von dem besagten Kanal wenigstens zwei Zweige in Richtung der jeweiligen Düseneinrichtungen ab. Vorzugsweise ist eine Dichteinrichtung vorgesehen, um den besagten Kanal gegenüber der Wandung des rohrförmigen Körpers abzudichten. Auch bei dieser Dichtungseinrichtung kann es sich um einen O-Ring handeln.

Dabei ist es möglich, dass diese Dichtungseinrichtung ein Bestandteil der Düseneinrichtung ist, etwa ein O-Ring, der in einer Nut der Düseneinrichtung einschiebbar ist. Daneben ist die Düseneinrichtung bevorzugt in einer Richtung gegenüber dem Träger in diesen einlegbar, die sich parallel zu einer Ebene erstreckt, welche durch die Dichtungseinrichtung bestimmt bzw. aufgespannt wird.

Daneben kann auch ein Anfangsabschnitt dieses Kanals derart ausgebildet sein, dass er geometrisch auf die Gestalt des rohrförmigen Körpers beispielsweise auf die Krümmung von dessen Umfangswand angepasst ist.

Bei einer weiteren vorteilhaften Ausführungsform sind die Löcher in der Umfangswandung des rohrförmigen Körpers auf einen Querschnitt des Kanals angepasst. Auf diese Weise können Veränderungen des Strömungsquerschnitts zwischen der Öffnung in dem rohrförmigen Körper und dem Kanal verhindert werden.

Bei einer weiteren vorteilhaften Ausführungsform ist die Auslasseinrichtung an eine der Umfangsformen des rohrförmigen Körpers angeordnete Öffnung anlegbar. Auf diese Weise wird wie oben erwähnt die Strömungsverbindung für die Flüssigkeit hergestellt.

Bei einer weiteren vorteilhaften Ausführungsform weist der rohrförmige Körper eine zweite insbesondere endseitige Auslasseinrichtung bzw. Auslassöffnung für die Flüssigkeit auf. Auf diese Weise kann bei Bedarf die Flüssigkeit nicht nur über die Auslasseinrichtung ausgetragen werden, sondern auch unmittelbar bzw. mittelbar über eine endseitige Öffnung des rohrförmigen Körpers. So wäre es auch möglich, dass eine zweite Auslasseinrichtung vorgesehen ist, welche insbesondere am Ende des rohrförmigen Körpers montiert ist. Auf diese Weise kann die Flüssigkeit auf mehreren Höhen bezogen auf die Längsrichtung des rohrförmigen Körpers ausgetragen werden. Dabei wäre es auch möglich, dass Öffnungen in der Umfangswandung und eine endseitige Öffnung des rohrförmigen Körpers derart aufeinander abgestimmt sind, dass jeweils die gewünschten Mengenverhältnisse an Flüssigkeit aus dem rohrförmigen Körper austreten können.

Daneben kann die Ausbringungsvorrichtung auch mehrere Auslasseinrichtungen der oben beschriebenen Art aufweisen, die insbesondere an dem gleichen rohrförmigen Körper, insbesondere jedoch auf unterschiedlichen Höhen desselben angeordnet sind.

Bei einer weiteren vorteilhaften Ausführungsform weist die Auslasseinrichtung wenigstens abschnittsweise eine gekrümmte Außenoberfläche auf. Durch diese gekrümmte Außenoberfläche kann die Auslasseinrichtung bei der Benutzung leichter durch das zu beaufschlagende Gut geführt werden und die Gefahr eines Verhakens ist geringer. So kann die Auslasseinrichtung in ihrer Gesamtheit bevorzugt eine eiförmige Struktur aufweisen.

Bevorzugt ist die Auslasseinrichtung derart gestaltet, dass sie an einem in dem rohrförmigen Körper montierten Zustand symmetrisch ist, insbesondere symmetrisch bezüglich einer Ebene, welche sich in der Längsrichtung des rohrförmigen Körpers erstreckt.

Bei einer weiteren vorteilhaften Ausführungsform ist der rohrförmige Körper an einer Halteeinrichtung angeordnet. Dabei ist es denkbar, dass der rohrförmige Körper in einen Abschnitt dieser Halteeinrichtung und insbesondere in einen hülsenartigen Abschnitt dieser Halteeinrichtung eingesteckt ist. Dabei kann der rohrförmige Körper beispielsweise mit Haltemitteln, wie etwa Madenschrauben an dem hülsenförmigen Abschnitt gehalten und/oder befestigt sein. Daneben wäre es auch denkbar, dass der rohrförmige Körper mit dem hülsenförmigen Abschnitt vergossen ist oder aber auch einteilig mit diesem ausgebildet ist.

Bei einer weiteren vorteilhaften Ausführungsform ist diese Halteeinrichtung schwenkbar an einem Träger angeordnet. Dabei kann es sich um einen Träger handeln, der ein Bestandteil der hier beschriebenen Vorrichtung ist, es könnte sich jedoch auch um einen Träger handeln, der durch einen Teil einer weiteren Maschine, etwa durch ein Maschinengestell gebildet wird.

Bei einer weiteren vorteilhaften Ausführungsform ist in einer (Schwenk-)Stellung der Halteeinrichtung gegenüber dem Träger ein Lösen der Halteeinrichtung von dem Träger ermöglicht. Bevorzugt handelt es sich hierbei um eine Schwenkstellung, die von einer Schwenkstellung im Arbeitsbetrieb abweicht. So wäre es möglich, dass der Bediener die Halteeinrichtung in diese Schwenkstellung gegenüber dem Träger schwenken und dann von diesem abnehmen kann. Bevorzugt ist in anderen Schwenkstellungen der Halteeinrichtung gegenüber dem Träger und insbesondere in solchen Schwenkstellungen, die im Rahmen eines Arbeitsbetriebs eingenommen werden, kein Lösen der Halteeinrichtung von dem Träger möglich.

So könnte etwa an der Halteeinrichtung oder dem Träger ein Vorsprung ausgebildet sein, der mit einer Ausnehmung, die an dem Träger oder der Halteeinrichtung ausgebildet ist, zusammenwirkt. Dieser Vorsprung könnte in einer Vielzahl von Schwenkstellungen den Träger hintergreifen und nur in einer Schwenkstellung durch die Ausnehmung führbar sein, wobei dann in dieser Stellung ein Lösen der Halteeinrichtung von dem Träger ermöglicht ist.

Weitere Vorteile und Ausführungsformen ergeben sich aus den beigefügten Zeichnungen:
Darin zeigen:
- Fig. 1: eine schematische Detaildarstellung einer Vorrichtung zum Ausbringen von Flüssigkeiten;
- Fig. 2: eine Explosionsansicht der in Figur 1 gezeigten Vorrichtung;
- Fig. 3 - 5: drei Darstellungen einer Befestigungseinrichtung.

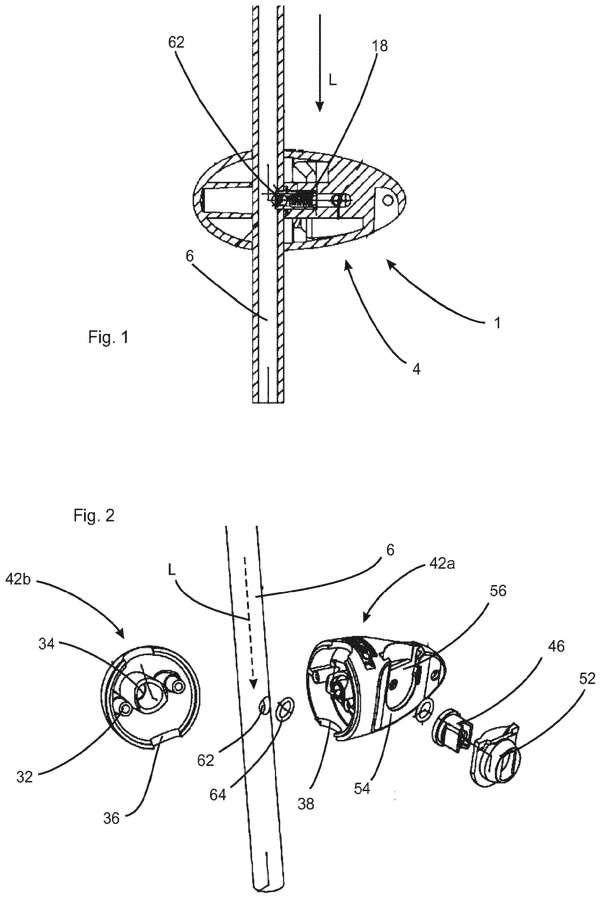

Figur 1 zeigt eine teilweise Schnittdarstellung einer erfindungsgemäßen Vorrichtung 1. Diese weist einen rohrförmigen Körper 6 auf, der zum Leiten einer Flüssigkeit, wie beispielsweise eines Schädlingsbekämpfungsmittels dient. Dieser rohrförmige Körper 6 weist dabei eine seitliche Öffnung 62 auf, durch welche ein fließfähiges Medium in eine in ihrer Gesamtheit mit 4 bezeichnete Auslasseinrichtung treten kann. Das Bezugszeichen L kennzeichnet eine Längsrichtung des rohrförmigen Körpers.

Die unten im Detail genauer beschriebene Auslasseinrichtung weist eine Federeinrichtung 18 auf, welche beispielsweise ein Rückschlagventil vorbelasten kann. Auf diese Weise kann erreicht werden, dass Flüssigkeit erst ab einem bestimmten Druck aus der Auslasseinrichtung austreten kann.

Figur 2 zeigt eine explosionsartige Darstellung der in Figur 1 gezeigten Vorrichtung. Man erkennt, dass die Auslasseinrichtung einen Klemmmechanismus aufweist, der ein Anklemmen der Auslasseinrichtung 4 an dem rohrförmigen Körper 6 ermöglicht. Zu diesem Zweck weist der Klemmmechanismus ein erstes Klemmteil 42a und ein zweites Klemmteil 42b auf. Diese können um den rohrförmigen Körper 6 herum angeordnet und miteinander verschraubt werden, so dass insgesamt die Auslasseinrichtung 4 an dem stangenförmigen Körper 6 befestigt ist. Dabei weist der erste Klemmkörper 42a eine Ausnehmung 38 auf und der zweite Klemmkörper 42b eine Ausnehmung 36, welche gemeinsam den rohrförmigen Körper 6 zumindest teilweise umgeben. Das Bezugszeichen 32 kennzeichnet Sitze für Schraubkörper, welche von außen eingeführt werden können, um so die beiden Klemmkörper 42a und 42b miteinander zu verschrauben.

Das Bezugszeichen 34 kennzeichnet einen Anpressabschnitt, der sich in einem montierten Zustand an den rohrförmigen Körper 6 anpresst. Das Bezugszeichen 64 kennzeichnet eine Dichtungseinrichtung, mittels der eine Dichtwirkung zwischen dem Klemmkörper 42a und dem rohrförmigen Körper 6 hergestellt werden kann. Das Bezugszeichen 54 kennzeichnet einen Träger, der zum Aufnehmen einer Düseneinrichtung 46 und eines Düsenhilfsabschnitts 52 dient. Dazu kennzeichnet das Bezugszeichen 56 einen Sitz, innerhalb dessen die Düseneinrichtung 46 eingeschoben werden kann.

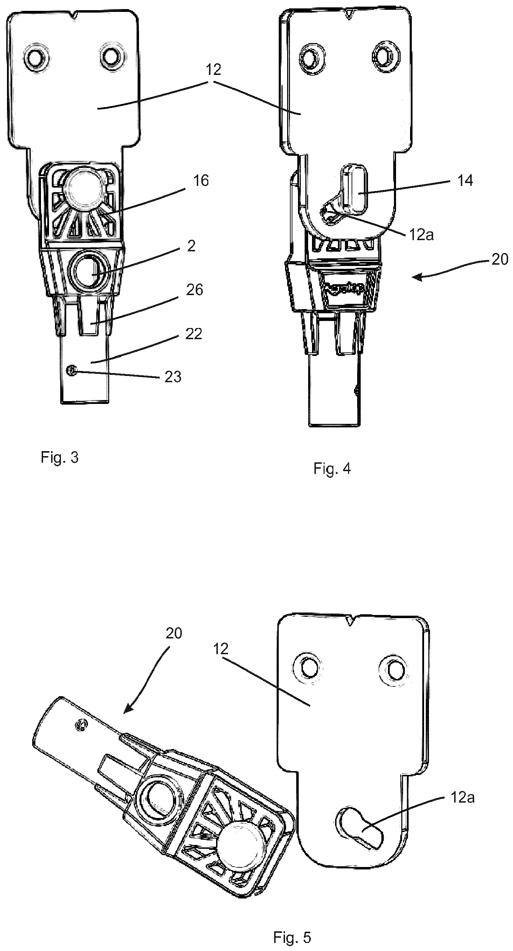

Die Figuren 3 bis 5 zeigen den Befestigungsmechanismus, mit dem die Vorrichtung an einem Fahrzeug angeordnet werden kann. Dabei ist ein Träger 12 vorgesehen, der beispielsweise mit einem Bereich des Fahrzeugs verschraubt werden kann. Das Bezugszeichen 20 kennzeichnet eine Halteeinrichtung, welche zum Halten des rohrförmigen Körpers 6 dient. Zu diesem Zweck weist diese Halteeinrichtung eine Hülse 22 auf, welche zur Aufnahme des rohrförmigen Körpers 6 geeignet und bestimmt ist. Der rohrförmige Körper kann in diese Hülse eingeschoben und etwa über eine Schraubeinrichtung 23 mit dieser verschraubt sein. Es wäre jedoch auch möglich, dass der rohrförmige Körper in die Hülse 22 eingepresst ist, oder diese hintergreift.

Das Bezugszeichen 2 kennzeichnet eine Zuleitung, über welche ein fließfähiges Medium an den rohrförmigen Körper 6 zugeführt werden kann. Das Bezugszeichen 26 kennzeichnet Verstärkungsstege. Das Bezugszeichen 16 kennzeichnet ein Schwenkelement, um die Halteeinrichtung 20 gegenüber dem Träger 12 zu schwenken.

Das Bezugszeichen 14 kennzeichnet einen langgestreckten Vorsprung, der einteilig an der Halteeinrichtung 20 ausgebildet ist und der in einer vorgegebenen Schwenkstellung durch eine Öffnung bzw. Aufnahmenut 12a, die in dem Träger 12 ausgebildet ist, führbar ist.

Figur 5 zeigt eine Explosionsdarstellung, wobei wiederum der Träger 12 dargestellt ist, sowie eine Aufnahmenut 12a, um das Element 16 schwenkbar aufzunehmen. Bei der in Fig. 5 gezeigten Stellung verlaufen der Vorsprung 14 und die Aufnahmenut 12a parallel zueinander so dass in dieser Stellung die Halteeinrichtung 20 von dem Träger entfernt werden kann. Der Vorsprung 14 ist bevorzugt an einem kreisförmigen Bolzen angeordnet.

Bei der in Figur 5 gezeigten Stellung handelt es sich um eine Stellung, die in einem Arbeitsbetrieb der erfindungsgemäßen Vorrichtung nicht eingenommen wird. Der Benutzer kann den rohrförmigen Körper jedoch in die in Fig. 5 gezeigte Stellung schwenken und dann die Halteeinrichtung 20 von dem Träger 12 abnehmen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Zuleitung
- 4: Auslasseinrichtung
- 6: rohrförmiger Körper
- 12: Träger
- 14: Vorsprung
- 16: Schwenkelement
- 18: Federeinrichtung
- 20: Halteeinrichtung
- 22: Hülse
- 23: Schraubeinrichtung
- 26: Verstärkungsstege
- 32: Sitze für Schraubkörper
- 34: Anpressabschnitt
- 36: Ausnehmung des zweiten Klemmkörpers
- 38: Ausnehmung des ersten Klemmkörpers
- 46: Düseneinrichtung
- 46: Düsenelement
- 52: Düsenhilfsabschnitt
- 54: Träger
- 56: Sitz
- 62: seitliche Öffnung des rohrförmigen Körpers
- 64: Dichtungseinrichtung
- 12a: Aufnahmenut
- 42a: erstes Klemmteil
- 42b: zweites Klemmteil Längsrichtung

## Patentansprüche

1. Vorrichtung (1) zum Ausbringen von Flüssigkeiten, Düngemitteln, Schädlingsbekämpfungsmitteln und dergleichen, mit einem Anschluss, um diese Vorrichtung (1) an einer Maschine zu befestigen, mit einem rohrförmigen Körper (6) zum Leiten der Flüssigkeit und mit einer ersten Auslasseinrichtung (4), über welche die Flüssigkeit auslassbar ist, wobei die Auslasseinrichtung (4) in einer Längsrichtung (L) des rohrförmigen Körpers (6) an unterschiedlichen Positionen fixierbar ist, derart, dass eine Position der Auslasseinrichtung bezogen auf den rohrförmigen Körper wählbar ist,
**dadurch gekennzeichnet, dass**
die Vorrichtung (1) in einer im Wesentlichen vertikalen Ausrichtung eingesetzt wird und durch diese Positionsbestimmung auch die Höhe bestimmt wird, auf der die Auslasseinrichtung angeordnet wird.

2. Vorrichtung (1) nach Anspruch 1,
**dadurch gekennzeichnet, dass**
in einer Umfangswandung des rohrförmigen Körpers (6) wenigstens eine Öffnung (62) angeordnet ist, durch welche hindurch die Flüssigkeit zu der Auslasseinrichtung strömen kann.

3. Vorrichtung (1) nach wenigstens einem der vorangegangenen Ansprüche,
**dadurch gekennzeichnet, dass**
die Auslasseinrichtung mittels eines Klemmmechanismus (42a, 42b) an dem rohrförmigen Körper (6) befestigbar ist.

4. Vorrichtung (1) nach wenigstens einem der vorangegangenen Ansprüche,
**dadurch gekennzeichnet, dass**
die Auslasseinrichtung (4) einen Träger (54) aufweist, wobei dieser Träger wenigstens ein erstes Trägerteil und ein zweites Trägerteil aufweist, welche aneinander und mit dem rohrförmigen Körper befestigbar sind.

5. Vorrichtung (1) nach wenigstens einem der vorangegangenen Ansprüche,
**dadurch gekennzeichnet, dass**
die Auslasseinrichtung wenigstens eine Düseneinrichtung (46) aufweist, wobei diese Düseneinrichtung (46) lösbar an einem Träger (54) der Auslasseinrichtung (4) angeordnet ist.

6. Vorrichtung (1) nach Anspruch 5,
**dadurch gekennzeichnet, dass**
die Auslasseinrichtung wenigstens zwei Düseneinrichtungen (46) aufweist, welche an dem Träger (54) angeordnet sind.

7. Vorrichtung (1) nach wenigstens einem der vorangegangenen Ansprüche,
**dadurch gekennzeichnet, dass**
die Auslasseinrichtung an eine in einer Umfangswandung des rohrförmigen Körpers angeordnete Öffnung anlegbar ist.

8. Vorrichtung (1) nach wenigstens einem der vorangegangenen Ansprüche,
**dadurch gekennzeichnet, dass**
der rohrförmige Körper aus einem Kunststoff hergestellt und/oder flexibel ist.

9. Vorrichtung (1) nach wenigstens einem der vorangegangenen Ansprüche,
**dadurch gekennzeichnet, dass**
der rohrförmige Körper (6) eine zweite endseitige Auslasseinrichtung für die Flüssigkeit aufweist.

10. Vorrichtung (1) nach wenigstens einem der vorangegangenen Ansprüche,
**dadurch gekennzeichnet, dass**
die Auslasseinrichtung wenigstens abschnittsweise eine gekrümmte Außenoberfläche aufweist.

11. Vorrichtung (1) nach wenigstens einem der vorangegangenen Ansprüche,
**dadurch gekennzeichnet, dass**
der rohrförmige Körper (6) an einer Halteeinrichtung (20) angeordnet ist und diese Halteeinrichtung schwenkbar an einem Träger (12) angeordnet ist, wobei in einer Schwenkstellung der Halteeinrichtung (20) gegenüber dem Träger ein Lösen der Halteeinrichtung von dem Träger ermöglicht ist.

## Claims

1. Apparatus (1) for spreading fluids, fertilizers, pesticides and similar, with a connection for attaching said apparatus (1) to a machine, with a tubular body (6) for conducting the fluid, and with a first outlet device (4) via which the fluid can be discharged, wherein the outlet device (4) can be fixed at various positions in a longitudinal direction (L) of the tubular body (6) such that a position of the outlet device relative to the tubular body can be selected,
**characterised in that**
the apparatus (1) is used in a substantially vertical orientation and by way of this position determination also the height at which the outlet device is arranged is determined.

2. Apparatus (1) according to claim 1,
**characterised in that**
at least one opening (62), through which the fluid can flow to the outlet device, is arranged in a peripheral wall of the tubular body (6).

3. Apparatus (1) according to at least one of the preceding claims,
**characterised in that**
the outlet device can be attached to the tubular body (6) by means of a clamping mechanism (42a, 42b).

4. Apparatus (1) according to at least one of the preceding claims,
**characterised in that**
the outlet device (4) comprises a carrier (54), wherein this carrier has at least a first carrier part and a second carrier part which can be fixed to each other and to the tubular body.

5. Apparatus (1) according to at least one of the preceding claims,
**characterised in that**
the outlet device comprises at least one nozzle device (46), wherein this nozzle device (46) is arranged releasably on a carrier (54) of the outlet device (4).

6. Apparatus (1) according to claim 5,
**characterised in that**
the outlet device comprises at least two nozzle devices (46) which are arranged on the carrier (54).

7. Apparatus (1) according to at least one of the preceding claims,
**characterised in that**
the outlet device can be placed on an opening arranged in a peripheral wall of the tubular body.

8. Apparatus (1) according to at least one of the preceding claims,
**characterised in that**
the tubular body is made from a plastic and/or is flexible.

9. Apparatus (1) according to at least one of the preceding claims,
**characterised in that**
the tubular body (6) comprises a second end-mounted outlet device for the fluid.

10. Apparatus (1) according to at least one of the preceding claims,
**characterised in that**
the outlet device has, at least in sections, a curved outer surface.

11. Apparatus (1) according to at least one of the preceding claims,
**characterised in that**
the tubular body (6) is arranged on a holding device (20) and this holding device is arranged pivotably on a carrier (12), wherein the holding device can be released from the carrier in a pivot position of the holding device (20) with respect to the carrier.

## Revendications

1. Dispositif (1) d'application de liquides, d'engrais, de pesticides et analogues, avec un branchement pour fixer ce dispositif (1) à une machine, avec un corps tubulaire (6) pour guider le liquide et avec un premier dispositif de sortie (4) par lequel le liquide peut être évacué, dans lequel le dispositif de sortie (4) peut être fixé à différentes positions dans une direction longitudinale (L) du corps tubulaire (6) de telle sorte qu'une position du dispositif de sortie peut être choisie par rapport au corps tubulaire,
**caractérisé en ce que**
le dispositif (1) est utilisé dans une direction essentiellement verticale et cette détermination de position détermine également la hauteur à laquelle le dispositif de sortie est disposé.

2. Dispositif (1) selon la revendication 1,
**caractérisé en ce que**
au moins une ouverture (62) est agencée dans une paroi périphérique du corps tubulaire (6) par laquelle le liquide peut s'écouler vers le dispositif de sortie.

3. Dispositif (1) selon au moins l'une des revendications précédentes,
**caractérisé en ce que**
le dispositif de sortie peut être fixé au corps tubulaire (6) au moyen d'un mécanisme de serrage (42a, 42b).

4. Dispositif (1) selon au moins l'une des revendications précédentes,
**caractérisé en ce que**
le dispositif de sortie (4) présente un support (54), dans lequel ce support présente au moins une première partie de support et une deuxième partie de support qui peuvent être fixées l'une à l'autre et au corps tubulaire.

5. Dispositif (1) selon au moins l'une des revendications précédentes,
**caractérisé en ce que**
le dispositif de sortie présente au moins un dispositif de buse (46), dans lequel ce dispositif de buse (46) est disposé de manière amovible sur un support (54) du dispositif de sortie (4).

6. Dispositif (1) selon la revendication 5,
**caractérisé en ce que**
le dispositif de sortie présente au moins deux dispositifs de buse (46) qui sont disposés sur le support (54).

7. Dispositif (1) selon au moins l'une des revendications précédentes,
**caractérisé en ce que**
le dispositif de sortie peut être placé contre une ouverture disposée dans une paroi périphérique du corps tubulaire.

8. Dispositif (1) selon au moins l'une des revendications précédentes,
**caractérisé en ce que**
le corps tubulaire est fabriqué en matière plastique et/ou est flexible.

9. Dispositif (1) selon au moins l'une des revendications précédentes,
**caractérisé en ce que**
le corps tubulaire (6) présente un deuxième dispositif de sortie pour le liquide à son extrémité.

10. Dispositif (1) selon au moins l'une des revendications précédentes,
**caractérisé en ce que**
le dispositif de sortie a une surface extérieure incurvée au moins par section.

11. Dispositif (1) selon au moins l'une des revendications précédentes,
**caractérisé en ce que**
le corps tubulaire (6) est disposé sur un dispositif de maintien (20) et ce dispositif de maintien est agencé de manière pivotable sur un support (12), dans lequel, dans une position pivotée du dispositif de maintien (20) par rapport au support, le dispositif de maintien peut être libéré du support.
